Europäisches Patentamt

European Patent Office

Office européen des brevets

(11) Publication number: **0 159 844**
A2

# (12) EUROPEAN PATENT APPLICATION

(21) Application number: **85302423.0**

(22) Date of filing: **04.04.85**

(51) Int. Cl.⁴: **G 01 S 13/84, G 01 S 13/87**

(30) Priority: **19.04.84 US 602115**

(43) Date of publication of application: **30.10.85**
**Bulletin 85/44**

(84) Designated Contracting States: **DE FR GB SE**

(71) Applicant: **CUBIC WESTERN DATA, 5650 Kearny Mesa Road, San Diego, California, 92111 (US)**

(72) Inventor: **Levy, George S., 5737 Menorca Drive, San Diego California 92124 (US)**

(74) Representative: **Blatchford, William Michael et al, Withers & Rogers 4 Dyer's Buildings Holborn, London EC1N 2JT (GB)**

(54) **Multi-frequency lane identification system.**

(57) A lane identification system employing a plurality of lane identification frequencies in a recursive manner to correct a lane count produced by a radio positioning system for establishing the location of a transceiver.

-1-

# MULTI-FREQUENCY LANE IDENTIFICATION SYSTEM

The present invention is in the field of radio positioning systems, and more specifically is in the field of positioning systems of the type measuring distance between a fixed transponder and a mobile transceiver by measuring the phase of a fixed-frequency ranging signal which is transmitted between them.

Radio positioning systems are known in the art, the system described in U. S. Patent No. 4,011,562 to Robert L. Bruce and assigned to the Assignee of the below-described invention being an example. In such systems, a distance is measured between each of a plurality of reference transponders and a mobile transceiver by transmitting between the system elements a signal having a predetermined base frequency. The distance is expressed as a number of wave lengths (or half wave lengths for "two-way" ranging systems) also called "lanes." The distance establishes the position of the transceiver relative to the transponder; it is obtained by multiplying the number of lanes by the base frequency wavelength. As is known, the total number of lanes, called the lane count, has both an integer and a fractional part. Measurement of the phase of the base frequency signal provides information on the fraction but not on the integer. Typically, the integer portion of the lane count is obtained by feeding successive instantaneous phase measurements into a continuously integrating counter so that every time the measurement passes $360^\circ$ the integer

-2-

portion of the count is incremented. A system employing such a integrating counter is described in U. S. Patent No. 3,303,502.

It is not unusual for the integer portion of the lane count to be inaccurate in ranging systems employing a single frequency. The inaccuracy can result from momentary equipment failures which occur when a base-frequency wavelength boundary is crossed, by aberrations in the transmission characteristics of the atmospheric frequency channel, or by varying phase delays which are artifacts of equipment operation. Such an error in the lane count will cause the position of the transceiver to be incorrectly indicated.

A frequency distance measuring system which reduces the potential ambiguity in lane count is disclosed in U. S. Patent No. 4,283,726. In this system, two signals having respective frequencies which are separated by a predetermined amount are combined to produce a difference frequency having a very long wavelength. The long wavelength eliminates the need to count frequency lanes while providing a reliable measurement of distance. However, this system makes no provision for variable transmission characteristics which can unpredictably affect the phase of either of the transmitted signals and thereby reduce the distance measurement precision.

Another system which includes lane ambiguity resolution is disclosed in the above-referenced U. S. Patent No. 3,303,502. In the resolution system of this patent, each transponder transmits a plurality of frequency signals which are variously combined at the transceiver to produce a variety of difference signals. The difference signals are selectably applied to an electro-mechanical lane identification servo mechanism which provides an indication of location in a lane corresponding to the selected difference frequency. The operator uses the indicated location in combination with a navigation chart to precisely identify his ranging frequency lane. One drawback of this lane identification system lies in the fact that there is no means for automatically adjusting the ranging lane indication through, for example, the provision of a feedback loop from the lane identification unit to the lane measurement portion of the system.

Therefore, there exists a need to provide a system for automatically resolving ambiguities occurring in the ranging lane count of a radio ranging system.

The present invention provides an improved system and method for identifying the frequency lane in a radio positioning system which accurately indicates the actual distance between a fixed transponder and a mobile transceiver.

The system of the invention is intended for use with a radio positioning system including at least one transponder which produces a base and one or more lane identification frequency signals and a mobile transceiver which determines, in base frequency lanes, the distance between itself and the transponder by measuring the phase of the base frequency signal. The system of the invention tests the lane count by converting the count to the equivalent number of identification frequency lanes for each of a plurality of lane identification frequencies and comparing the measured phase of each lane identification frequency with the converted count. The converted distance includes a fractional part which is equivalent to a phase of the lane identification signal, and this phase value is compared to the measured value of the lane identification frequency phase to develop a range error signal. When the true position of the transceiver deviates from that indicated by the lane count, a range error will have a non-zero value. The range error is converted to distance, combined with another, finer range error resulting from a higher lane identification frequency and then converted to a count of base frequency lanes constituting a correction value by which the lane count must be changed to indicate the transceiver's actual position.

The lane conversion and comparison process is carried out for each lane identification frequency so that a plurality of range error signals are generated, with each error signal combined with the range error signal of a higher frequency lane identification signal. The result is the accumulation of a correction value which is scaled to base frequency lanes and which can be combined with the current lane count to provide a corrected, true lane count.

The system of the invention includes a plurality of range error measurement sections, each for, based upon a respective measured lane identification signal phase and a phase of the respective lane identification frequency which corresponds to the lane count, measuring the difference between a location represented by the lane count and the true location of the transceiver. Each range error measurement section produces a signal representative of the measured difference. A difference accumulation section responds to the provided range error signals and combines them to produce a lane correction signal representative of the correction which must be made to the accumulated lane count to convert it to a lane count corresponding to the true location.

The invention further covers a method for correcting a lane count indicating the location of a mobile transceiver in a radio positioning system including the transceiver and a transponder producing a base and a plurality of lane identification frequency signals. The transceiver includes a phase measurement capability and conventional position location equipment for measuring the frequency signal phases and for counting the lanes based upon measurement of the base frequency.

The method includes measurement of a plurality of range errors, each based upon the difference between the measured phase of a respective lane identification frequency and a phase of the respective lane identification frequency which is calculated from the base frequency lane count. Each range error corresponds to the difference between the transceiver's actual location and a location corresponding to the calculated phase.

A range error based upon a respective lane identification frequency is combined with another range error based upon a higher lane identification frequency to produce a lane count correction signal representative of

0159844

-6-

the number of lanes by which said lane count differs from a lane count indicating the transceiver's actual position.

Accordingly, it is a principal object of the present invention to provide an improved system for removing ambiguity from the lane count provided by a radio positioning system.

It is a further object of the present invention to utilize a plurality of lane identification frequency signals in a system employing recursive, cascaded means for utilizing those signals to produce a lane count correction.

It is a further object of the present invention to provide a method for employing a plurality of lane identification frequency measurements in a radio positioning system to adjust an incorrect base frequency lane count.

Other objects and many attendant advantages of the present invention will become more apparent when the following specification is read together with the described drawings.

Figure 1 is a block diagram illustrating an existing radio positioning system employing a pair of ranging frequencies.

Figure 2 is a block diagram of the system of the invention in combination with a radio positioning system employing one base and a plurality of lane identification frequencies.

Figure 3 combines an illustration of the application environment of the invention with a waveform drawing illustrating the operation of the invention with three frequencies.

Figure 4 is a schematic diagram illustrating the system of the invention.

Figure 5 is a schematic of a processor subroutine used to correct a frequency lane count.

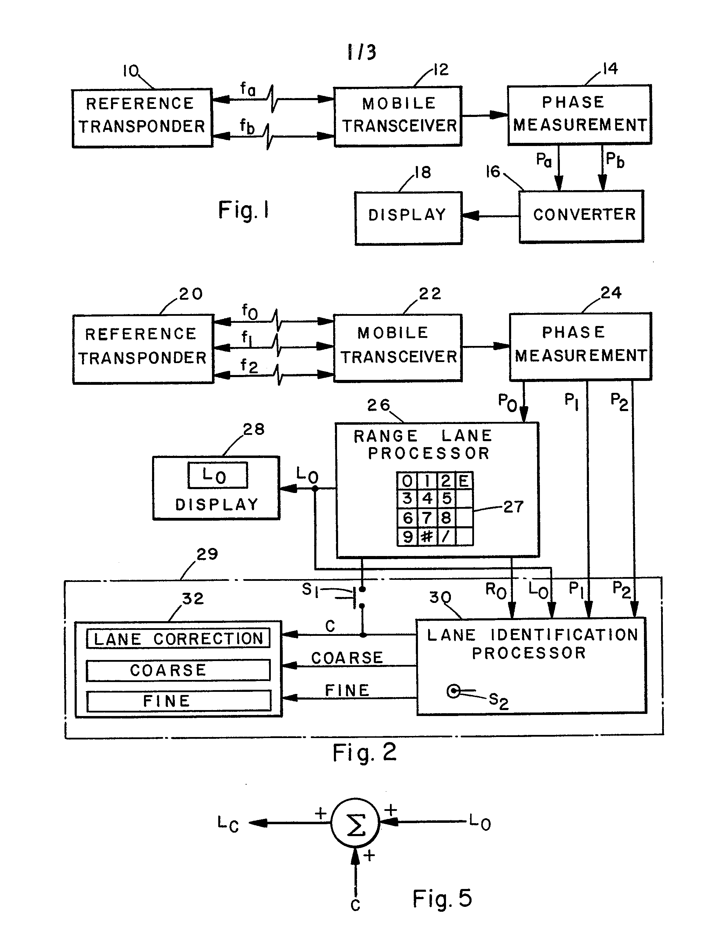

Referring to Figure 1, in an existing radio positioning system, each of a plurality of transponders, one of which is indicated by 10, transmit two or more signals, each having a frequency which is separated from the other frequency by a selected amount. In Figure 1 these frequencies are indicated by $f_a$ and $f_b$ where $f_b > f_a$. A mobile transceiver 12 receives the frequency signals and passes them to a phase difference measurement unit 14 which measures respective phases of the signals as well as the phase of the difference frequency produced by the frequencies $f_a$ and $f_b$. The phase measurements are passed to a phase-to-distance converter 16 which converts the measured phases into predetermined units of distance. For example, the phase measurements can be converted into frequency $f_a$ lanes, frequency $f_b$ lanes or lanes of frequency $(f_b - f_a)$. Customarily, the converter 16 includes means for accumulating the converted phase measurements counts so that an accurate record of distance between the transponder 10 and the transceiver 12 can be maintained and periodically incremented. Such accumulation can be performed by, for example, an integrating counter or an appropriately-programmed processor which includes means for sampling the analog phase measurements, converting the samples to digital values, and processing those values to track signal phase changes and to accumulate the desired lane count. Further, use of processor permits the automatic conversion of lane counts to meters by multiplying the lane count by the lane width in meters (equal to the wavelength of the base frequency for one-way ranging systems and equal to half the wavelength for two-way ranging systems). Typically, the distance converter provides a signal to operate a display 18 which indicates the accumulated count either as frequency lanes or as a corresponding distance such as kilometers.

Figures 2-4 illustrate the general arrangement of the system of the invention and how it operates in conjunction with existing ranging system components.

In its most general form, the system operates with a radio positioning system including at least one reference transponder 20 and a mobile transceiver 22 which exchange a plurality of signals including a base signal having a frequency $f_0$ and a plurality of lane identification signals, each having a respective frequency. Two lane identification signal frequencies are indicated for purposes of illustration as $f_1$ and $f_2$. The transceiver 22 includes a conventional phase measurement section 24 which has the capability of measuring the respective phases of each of the frequency signals. In Figure 2 the phase measurements of signals $f_0$ through $f_2$ are indicated by $p_0$

to a range lane processor 26, which can comprise an INTEL 8080 programmed to continuously sample $p_0$ and convert the samples to $f_0$ lanes according to well-known principles. The $f_0$ lanes are accumulated by the processor 26 as the transceiver moves relative to the transponder 20. An initial lane count can be entered manually into the processor by means of a conventional entry keyboard 27. The lane count currently accumulated by or entered into the processor is displayed on the $L_0$ readout of a conventional display 28.

The system of the invention, indicated by 29, includes a lane identification processor 30, which, in the preferred embodiment comprises a PDP 11/23, appropriately programmed to receive $p_1$, $p_2$, and $L_0$ and to use these parameters to generate a lane correction value C. The value C represents the number of $f_0$ lanes by which $L_0$ differs from the true number of lanes between the transponder 20 and the transceiver 22; it is combined with $L_0$ by the processor 26 to correct the lane count when switch $S_1$ is depressed. The processor 30 also generates a coarse and a fine range error function, both explained hereinbelow, from the parameters $L_0$, $p_1$, and $p_2$. All three outputs of the lane identification processor 30 - the correction value C, the coarse and the fine fractions - are provided by the processor 30 to a display 32 where they are shown on respective readouts. When the coarse and fine fraction readouts indicate convergence of the lane identification process, explained below, an operator depresses switch $S_1$, transferring C to the range lane processor 26 where it is combined with $L_0$ to correct the lane count.

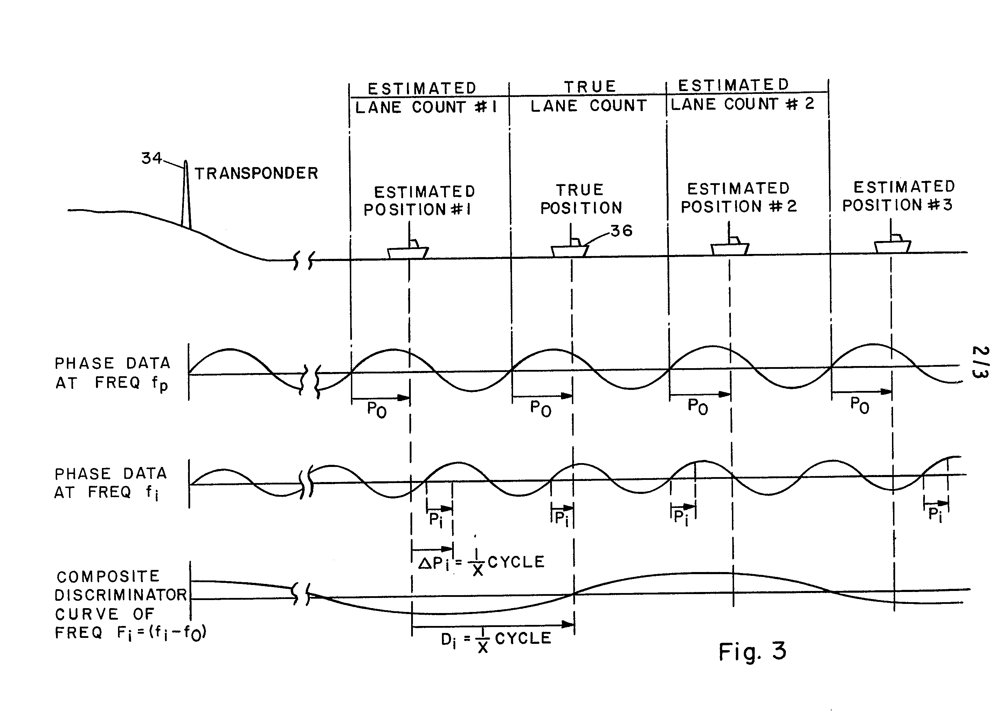

As illustrated in Figure 3, the transponder has a location which is indicated in the Figure by an antenna 34. The distance between the location of the transponder antenna and a ship 36 where the transceiver 22 is located is measured in wavelengths or lanes of frequency $f_0$. The measurement between the transponder and the ship 36 is done conventionally. Lane counting by signal phase measurement is taught in U.S. Patent Nos. 4,011,562 and 4,229,737, both assigned to the assignee of this invention and incorporated herein by reference. Measurement of phase and counting of lanes for ranging purposes are also employed in a radio positioning system available from the assignee of this invention under the trademark ARGO.

The mobile station (which includes the elements 22-32, inclusive, in Figure 2) on the ship 36 receives the signal from the transponder location 34. The phase of the received signal is compared with the phase of the signal originally broadcast from the ship 36 and the phase difference is used to determine the fractional value of the distance between the locations in frequency lanes which are equivalent to wavelengths of $f_0$. The whole lane numbers cannot be measured directly by this technique but they can be calculated as described hereinabove by accumulating the fractional lane changes in the processor 26 starting from a predetermined position where the correct lane number including an integer plus a fractional part is entered via the panel 27. Such a predetermined position can be, for example, at a dock from which the ship 36 begins a passage, or at a point offshore from the transponder location 34 which is marked by a buoy.

If for some reason the phase measurement process is interrupted or corrupted by noise, the integer portion of the accumulated range count can be incorrectly calculated. The result will be a distance which is ambiguous in its whole lane count but accurate in its fractional part. The system of the invention allows data from a plurality of lane identification frequencies to be used to reduce this ambiguity. In practice, the inventor found the following frequencies to be useful: $f_0 = 1615kHz$, $f_1 = 1635kHz$, and $f_2 = 1770kHz$.

Returning to Figure 3, the processor 26 may provide an incorrect lane count which corresponds to estimated position #1 or #2. The objective of the invention is to provide a correction which can be used to change the lane count to the true count which will correctly locate the ship 36 at its true position. This is impossible to accomplish using only $p_0$, the measured phase of $f_0$, since $p_0$ is measured once in every lane of $f_0$ and thus does not identify the true lane.

Each lane identification frequency (indicated generally by $f_i$ in Figure 3), however, provides phase data which is useful for identifying the true lane. For example in Figure 3, the true location of the ship 36 will result in a phase measurement of $p_i$ for the $f_i$ signal. If, however, the range processor 26 incorrectly indicates that the ship is located at estimated position #1 by causing an erroneous lane count to be displayed, a phase error, $\Delta p_i$ exists between the measurements at $p_0$ and $p_i$. This phase error corresponds to a certain portion, $1/X$, of an $f_i$ lane.

-12-

If a difference frequency $F_i = (f_i - f_0)$ is taken, then the difference between estimated position #1 and the true position is equivalent to the portion 1/X of a wavelength of $F_i$. This difference, termed a range error and indicated by $D_i$, can be converted to whole lanes of $f_0$ and combined with the incorrect lane count to correct its integer portion to that of the true lane count.

It should be evident that the difference frequency $F_i$ defines lanes which are much wider than the lanes of the $f_0$, $f_1$, or $f_2$ signals. These difference frequency lanes are termed hyperlanes.

Effectively the system of the invention operates by using difference frequencies resulting from combining the base ($f_0$) and lane identification ($f_1$ and $f_2$) frequencies, with each difference frequency functioning as a sine wave discriminator curve. The system employs the discrimination of each difference frequency curve to produce a composite discriminator which greatly reduces the ambiguity in the tracking error of the lane count.

The coarsest level of discrimination is defined by the frequency $F_1 = (f_1 - f_0)$. The ambiguity of this discriminating frequency is low, but its coarse tracking error is high. In fact, it is so high that it can exceed a lane width at $f_0$. A second or fine discriminator frequency is used which is equivalent to $F_2 = (f_2 - f_0)$. Its ambiguity characteristic is not as good as that of $F_1$, but its tracking error is lower. The system of the invention essentially combines the low ambiguity of the coarse discriminator with the tracking error of the fine discriminator to produce an effective composite discriminator.

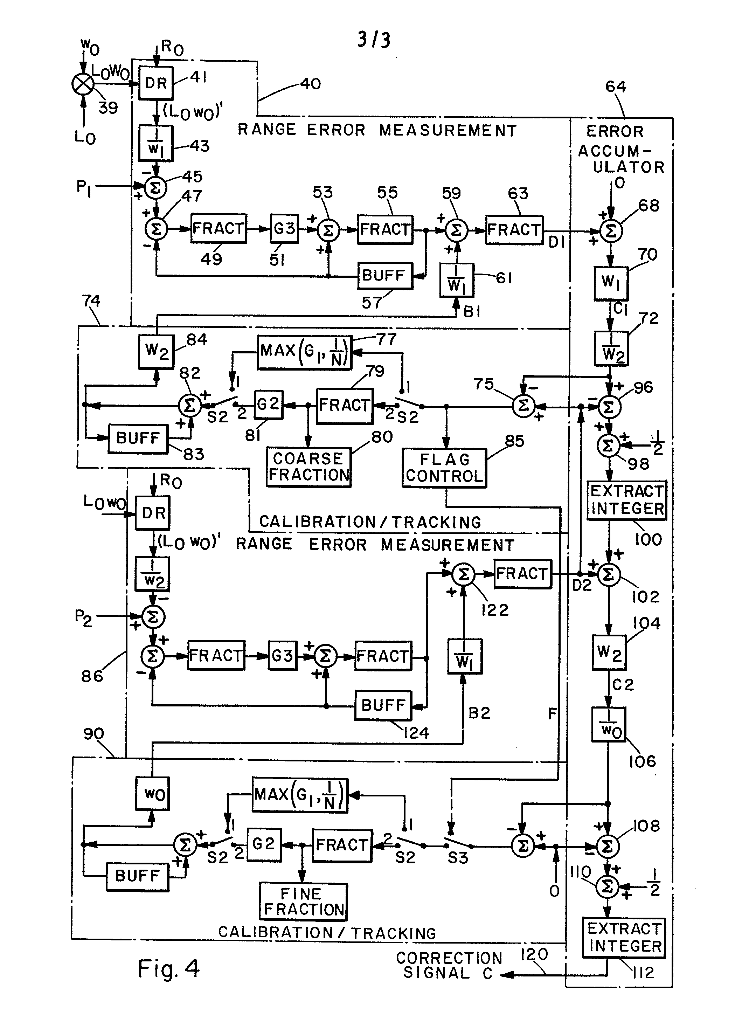

With reference to Figure 4, the procedure employed by the lane identification processor 30 to produce the correction value C is illustrated in detail. The inputs for the procedure are $p_1$ and $p_2$ from the phase measurement section 24, as well as $L_0$ from the processor 26. In addition, the processor 26 provides a ranging rate $R_0$ which is equivalent to the average rate of change of $L_0$ per unit of time. Essentially, $R_0$ is the rate at which the ship 36 traverses the $f_0$ lanes. For processing efficiency, the phase measurements $P_1$ and $P_2$ are converted by the processor 30 into fractions of equivalent $f_1$ and $f_2$ lanes by division by $2\pi$ radians.

The procedure of Figure 4 represents an operating program for the lane identification processor 30. As such, its implementation into a series of coded program steps is within the capability of any typically-skilled programmer having access to the PDP 11/23 Programmer's Manual.

The lane identification processor 30 performs the lane identification process in a recursive manner starting with the frequency $f_1$ which is closest to $f_0$, which, if combined with $f_0$, would produce the difference frequency $F_1$ having the widest or coarsest hyperlane possible for any difference frequency defined by $f_i - f_0$. The width of a

-14-

hyperlane is given by equation (1), where $W_i$ is hyperlane width and $C_i$ is the propagation velocity of $f_i$.

$$W_i = \frac{C_i}{2(f_i - f_0)} \qquad (1)$$

In the lane identification system of the invention, the lane count $L_0$ derived from $f_0$ phase data is fed to a multiplier 39 which also receives the nominal width $w_0$ (in meters) of an $f_0$ lane (which is also equivalent to the wavelength of $f_0$). The resulting product, corresponding to the nominal distance in meters represented by $L_0$, is fed to a range error measurement circuit 40 which measures the portion of the $F_1$ hyperlane corresponding to the difference between the true position of the ship 36 and the position indicated by $L_0$.

In the range error measurement circuit 40, the count $L_0$ is fed to a dead reckoning processor block 41. The dead reckoning processor block 41 performs the well-known dead reckoning process by multiplying the elapsed time since the last update of $L_0$ by the range rate $R_0$ provided by the range lane processor 26. The product of the elapsed time and the range rate is added to $L_0 w_0$ to provide an updated, dead reckoned distance $(L_0 w_0)'$. The updated distance is fed to a processing block 43 which scales the distance to frequency $f_1$ lanes by dividing by $w_1$, the wavelength or lane width of the lane identification frequency $f_1$. It should be evident that the scaled output of the processing section 43 comprises a number having an integer and a fractional part, the fractional part being essentially equivalent to a phase value of $f_1$. The scaled value is combined in the adder 45 with the converted value of $P_1$.

The resulting output of the adder 45 consists of a number having an integer and a fractional part. The fractional part corresponds to the phase error $\Delta P_1$ and is in circular units or lanes of frequency $f_1$. A zero phase error value can indicate that $L_0$ is equal to the true lane count. Thus, for example, in Figure 3 the conversion of the ranging lane count $L_0$ which indicates the true position of the ship 36 will, when scaled to frequency $f_1$ lanes have a fractional part which is represented by $p_i$ indicated in the Figure. Alternatively, a zero phase error can indicate that the range $L_0$ is incorrect by exactly an integral number of $F_1$ hyperlanes. However, the likelihood of this possibility is substantially reduced by choosing $f_0$ and $f_1$ to be relatively close together, thereby producing a relatively wide hyperlane.

It should be evident that non-zero phase errors produced by the adder 45 indicate an incorrect integer portion in $L_0$ which is equivalent to an erroneous lane count. For example, at estimated position 1 in Figure 3 the phase error for $f_1$ (and also for $f_2$) will be non-negative. When the $f_1$ phase error is calculated at adder 45, the result assumes a positive sign and is fed to an adder 47 where the output of adder 45 is combined with another value explained below. The output of the adder 47 is fed to a fractioning processing block where the fractional part of the output, corresponding to the filtered phase error, is extracted by adding 0.5 to the difference, dropping the integer portion of the sum, and then subtracting 0.5. This confines the filtered phase error to the range from -0.5 to +0.5. Henceforth, whenever the process of extracting a fraction is referred to hereinbelow, it is identical to the process just described for the fractioning block 49.

Once the filtered phase error has been obtained in the manner described, the fractioning section 49 provides a signal which represents the extracted fraction to an amplification circuit having a gain $G_3$, the output of which is fed to one non-inverting input of an adder 53. The output of the adder 53, which is non-inverting, is fed to another fractioning block 55 whose output branches to a buffer 57 and the non-inverting input of an adder 59. The buffer 57 accumulates successive increments of the filtered phase error and provides the accumulated value to the inverting input of the adder 47 and the non-inverting input of the adder 53.

It should be evident to those skilled in the art that the elements 47-57 comprise a conventional circular alpha filter especially designed to ignore integer values and provide an output which wraps around between -0.5 and +0.5. In the filter, the filtered accumulated output from the buffer 57 is fed back and subtracted from the input phase error. The residual fraction is then extracted and multiplied by the filter gain $G_3$ and the result is added to the filter output, with the fraction being saved in the buffer 57 for the next phase error measurement iteration. It will be evident to those skilled in the art that the buffer 57 stores an accumulated filtered phase error value having a magnitude and sign which is equivalent to the accumulated phase error resulting from all of the prior iterations of the phase error measurement.

The output of the above-described alpha filter is fed to the non-inverting input of an adder 59 which also accepts at another non-inverting input the output of a scaling circuit 61. (The circuit 61 scales a prior accumulated calibration value $B_1$, which is explained in greater detail hereinbelow.) The output of the adder 59, which is not inverted, is fed to another fractioning block 63 which provides, as an output, an accumulated, calibrated range error signal $D_1$ equivalent to the fraction of an $F_1$ hyperlane by which the true position of the ship 36 varies from its estimated position. The sign of $D_1$ indicates the direction of variation. Since $D_1$ is derived from the coarse $F_1$ hyperlane, it is termed the "coarse" range error.

The $D_1$ range error is provided as one input to an error accumulator 64, which adjusts $D_1$ by one or more finer range errors to produce the correction value C. The first element of the accumulator 64 is the adder 68.

In the adder 68, the coarse range error $D_1$ is combined with 0 and the output is transformed in multiplication circuit 70 to a distance in meters by multiplying it by $W_1$, the length of an $F_1$ hyperlane. The resulting distance value $C_1$ is fed to another scaling circuit 72 where it is divided by the wavelength $W_2$ to convert it into an equivalent portion of an $F_2$ hyperlane.

The output of the scaling circuit 72 is fed to a calibration and tracking section 74, the purpose of which is to combine a calibration offset with the uncorrected, filtered range error of the range error measurement section 40 to remove the effects of system equipment phase delay from the measured phase error. A second purpose of the section 74 is to continuously align the phase error measurement of the $f_1$ range error section 40 by accounting for the slow creep in phase error measurement which is caused by propagation anomalies in the transmission band of the $f_1$ tracking signal.

In the calibration and tracking section 74, the $C_1$ correction factor, scaled by scaling block 72 to $F_2$ hyperlanes, is provided first to an adder 75 where it is subtracted from the accumulated, calibrated, fine range error measurement $D_2$ resulting from the phase error measurement of $p_2$. The output of the adder 75 is fed to one input port of a switch $S_2$.

The switch $S_2$, which can comprise a conventional manually-operated multi-position, multi-pole switch mounted on the processor 30 is selectably positioned by the operator of the transceiver 22 who is located on the ship 36. In the first position of the switch $S_2$ the scaled $F_2$ hyperlane portion provided by the adder 75 is fed to a gain circuit 77 where it is multiplied by the maximum of either of a fixed gain, $G_1$, or a variable gain, $1/N$. In the gain circuit 77, the quantity N is equivalent to the number of iterations of the gain circuit 77. In the preferred embodiment, the gain $G_1$ is set at $1/30$ so that, after 30 iterations of the lane identification system with the switch $S_2$ set to its first position, the calibration gain will be constant.

With switch $S_2$ set at its second position, the output of the adder 75 is fed to a fractioning block 79 and therefrom through a gain amplifier 81. The output of the fractioning block 79 is also fed to the coarse readout in the display 32 which provides a visible output indication of the current coarse tracking fraction as a percentage of an $F_2$ hyperlane. The significance and purpose of the current coarse tracking fraction are explained hereinbelow.

The output of either the gain amplifier 77 or the gain amplifier 81 is provided through another pole of the switch $S_2$ to the non-inverting input of an adder 82. The output of the adder 82 is accumulated in a buffer 83 whose contents are fed to the other non-inverting input of the adder 82. The output of the adder represents the sum of the contents of the buffer 83 and the current input to the adder 82. Essentially, the output of adder 82 is a dimensionless value representing a portion of an $F_2$ hyperlane. The value is converted to an absolute distance measurement by multiplying it by the distance $W_2$, the span in meters of an $F_2$ hyperlane. This is carried out in the multiplier 84.

The signal $B_1$ output by the multiplier 84, which is the output of the calibration and tracking section 74, represents a calibration offset distance having a current value in meters which is used to correct the current coarse range error measurement by removing phase delays imposed on $f_1$ by equipment and transmission. This calibration distance is scaled into a portion of an $F_1$ hyperlane by the scaling circuit 61.

Also provided in the calibration and tracking section 74 is a flag control 85 which senses the difference between the coarse range error scaled to $W_2$ hyperlanes through the multiplier 70 and the scaler 72 and the range error measurement $D_2$ which is based upon the measurement of the phase $p_2$. The fractional part of the difference is used to determine whether the process in the calibration and tracking section 74 has converged so as to initiate the operation of a finer calibration and tracking unit, in this case, calibration and tracking unit 90. In the preferred embodiment, if the fractional difference is smaller than one-half of an $F_2$ hyperlane width, then convergence is assumed and a flag control indicator is set and sent to the calibration and tracking section 90. If convergence has not yet occurred, the flag will remain at zero, and the calibration and tracking section 90 will not operate.

A range error measurement section 86 is equivalent in all respects to the phase error measurement section 40 with the exception that the operation develops a fine range error based upon the measurement of the phase of frequency signal $f_2$, with the measurement provided in units which are scaled to the $F_2$ hyperlane. The output $D_2$ of the range error measurement section 86 is the difference between the true location of the ship 36 and a location indicated by $L_0$ expressed in $F_2$ hyperlanes.

The calibration and tracking section 90 is identical in all respects with the calibration and tracking section 74, with the exception that its input is controlled by the switch $S_3$. When the convergence flag in section 74 is set by the flag control unit 85, switch $S_3$ is closed and the section 90 operates in the same manner as the section 74, with the exception that the result of its process, $B_2$, is scaled to base frequency ($f_0$) lanes. In addition, the section 90 provides an output in appropriate form and format which is indicative of the portion of an $f_0$ lane by which the fine range error measurement $D_2$ is being corrected. This output is displayed on the FINE readout of display 32.

The error accumulator 64 accepts as input the range error measurements $D_1$ and $D_2$ and accumulates them into the composite lane correction signal C. Included in the accumulator are the adder 68, multiplier circuit 70 and scaling circuit 72 already described hereinabove. The output of the scaling circuit 72 is the calibrated range error measurement $D_1$ which has been scaled into $F_2$ hyperlanes by the scaling circuit 72. The scaled range error is fed to the non-inverting input of an adder 96, which also receives, as an inverted input, the range error measurement $D_2$. The result of the subtraction performed by adder 96 is fed to a non-inverting input of an adder 98 where it is added to +0.5, which essentially rounds up the subtraction results.

In accumulator section 100, the integer resulting from the addition performed by the adder 98 is extracted and added, at adder 102, to the range error signal $D_2$ based upon the measurement of phase $p_2$. Since the range error measurement $D_2$ is provided in fractions of $F_2$ hyperlanes, it can be added directly to the integer obtained from the circuit section 100.

The quantity obtained by the operation in the adder 102 is fed to multiplier 104 where it is multiplied by the width $W_2$ of an $F_2$ hyperlane to convert to an absolute distance.

The value obtained from the multiplier 104 is fed to another scaling circuit 106 where it is scaled to $f_0$ frequency lanes, and added, through adders 108 and 110, to +0.5, again rounding the difference up to the next whole $f_0$ lane. The integer portion of the sum obtained in the adder 110 is extracted from the sum in circuit section 112, and the integer obtained is provided as a correction signal on a signal line 120. The correction signal corresponds to the value of the integer obtained in the circuit section 112, and it is this integer which is combined with $L_0$ to correct the ranging frequency lane count or, viewed from another aspect, to correctly identify the ranging frequency lane where the ship 36 is located.

It should be noted that in the sequence of operations performed in the accumulator 64, the signs of the respective phase error signals are carried through to the end of the procedure which results in extraction of the integer in the circuit section 112, so that the integer extracted has the sign which is necessary to properly adjust the accumulated lane count in the direction required to indicate the true position of the ship 36.

In operation, the apparatus of the invention is initially calibrated when the ship 36 is located at the pre-determined calibration location. Here, the known lane count is entered manually into the range lane processor 26, the switch $S_2$ is placed in its calibration position, and the lane identification apparatus is allowed to run for as many iterations as is necessary to force the average of the outputs of the adder circuits 59 and 122 in the calibration and tracking circuits 74 and 90 to zero, which will be displayed on the coarse and fine readouts, respectively, of the display 32. When this occurs, the buffers 83 and 124 will hold values which correspond to the $p_1$ and $p_2$ shifts, respectively, which are artifacts of radio positioning system equipment operation.

Once the calibration values have been accumulated, the switch $S_2$ is set to its second, or tracking position so that the calibration value stored in the buffers is altered by the current tracking phase shifts which are caused by atmospheric anomalies.

In the preferred embodiment the values of the gains $G_1-G_3$ are selected so that $G_3 < G_2 < G_1$, and $G_1$ is greater than the the expected natural change in phase error due to changes in propagation, which is a function of boat speed and transponder geometry. This permits slow changes in phase error due to propagation to be accumulated in the buffers 83 and 124. However, the gains are kept below a level which would permit them to respond to instantaneous changes in $L_0$ which would destabilize the operation of the apparatus. In the preferred embodiment, $G_3 = 0.1$, $G_2 = 0.3$, and $G_1 = 0.01$.

Since the system of Figure 4 can be viewed as a series of computer program steps, it should be obvious that the system of the invention can comprise a recursive process which, under the timing control of the processor 26, can continually sample the variables $L_0$, $p_1$, and $p_2$, for so

long as $S_2$ is in position 2, the sampling proceeding at any appropriate rate established by the processor. Thus for a succession of variable sample sets, the values $D_1$ and $D_2$ can be continuously calibrated to provide accurate range error measurements which are accumulated in the accumulator 64 to produce an accurate corrective signal. The accuracy of the correction is indicated, in the preferred embodiment, by the coarse and fine fraction readouts. Where either is close to the +/-0.5 lane boundary convergence is assumed not to be complete. Where both have stabilized close to zero convergence is assumed to be complete and an operator can depress switch $S_1$ transferring the correction C to the range lane processor 26 where it will be combined with $L_0$ to produce a corrected lane count indicative of the true position of the ship 36. Such a combination can be implemented, for example, in a summation routine illustrated in Figure 5 or in the program of the range lane processor which takes the current lane count $L_0$ and combines it with C. The sign of C will correctly adjust $L_0$ up or down to procure a corrected lane count indicative of the true location of the ship 36.

A feature of the disclosed system that distinguishes from other range correction systems is that the frequencies used do not have to be integral multiples of each other or be multiples of a common lower frequency.

Obviously, many modifications and variations of the present invention are possible in light of the above teachings. It is therefore to be understood that within the scope of the appended claims this invention may be practiced otherwise than as specifically described.

CLAIMS

1. A system for correcting a count of frequency lanes in an arrangement for radio positioning including a transponder producing a base and one or more lane identification frequency signals and a mobile transceiver located at an actual location which has means for measuring signal phase to produce a location indicating number of base frequency lanes between itself and the transponder, comprising:

range error measurement means responsive to a lane identification signal phase and said number of lanes for measuring the difference between said transceiver's actual location and a location represented by said number of lanes and for providing a range error representative of said difference; and

accumulation means for, based upon said range error, producing a lane count correction which, when combined with said number of lanes, results in another number of lanes indicative of said actual location.

2. The system of claim 1 further including a plurality of range error measurement means each for measuring a respective location difference based upon the difference between the phase of a respective lane identification signal and a phase of said respective lane identification signal represented by said number of lanes.

3. The system of claim 1 wherein each said range error corresponds to the portion of the wavelength of the difference frequency resulting from the combination of said base frequency with a respective lane identification frequency, said portion being substantially equal to the difference between said actual location and a location represented by said number of lanes.

4. The system of claim 3 wherein said accumulation means includes means for adjusting the location difference represented by a first range error by another location difference represented by a second range error and providing said lane correction based upon said adjustment.

5. The system of claim 4 wherein said first range error is measured based upon a first lane identification frequency, said second range error is measured based upon a second lane identification frequency, and said second lane identification frequency is higher than said first.

6. The system of claim 5 wherein said base frequency is lower than said first lane identification frequency.

7. The system of claim 2 further including a plurality of calibration means, each based upon measurement of a respective range error for accumulating a calibration value representative of phase delay associated with the respective lane identification frequency upon which said respective range error is based and wherein each range error measurement means includes means for adjusting the respective range error which it provides by the calibration value corresponding to the respective lane identification frequency upon which the respective range error is based.

8. A method for correcting a lane count indicating the location of a mobile transceiver in a radio positioning system including said mobile transceiver and a transponder producing a base and one or more lane identification frequency signals and with means in said transceiver for measuring the respective phases of said frequency signals and counting said lanes, comprising the steps of:

measuring a plurality of range errors, each based upon the difference between the measured phase of a respective lane identification frequency and a frequency signal phase represented by said lane count and representing the location difference between said transceiver's actual location and a location corresponding to said lane count; and

combining said range errors to produce a lane count correction which, when combined with said lane count, results in a corrected lane count indicative of said actual location.

9. A radio positioning system for estimating the actual location of a mobile transceiver, comprising:

transponder means for producing a base and one or more lane identification frequency signals;

lane count means in transceiver for measuring the phases of said frequency signals and for, based upon the phase of said base frequency signal, providing a base frequency lane count corresponding to said estimated location;

lane count correction means responsive to one or more lane identification signal phases and to said lane count for providing a lane count correction representative of a number of base frequency lanes by which said estimated location differs from said actual location and for providing an error convergence indication representative of the accuracy of said correction;

selectively operated means for providing said lane correction to said lane count means; and

means in said lane count means for combining said lane count and said lane correction to produce a corrected lane count.

1/3

**REFERENCE TRANSPONDER** 10

$f_a$
$f_b$

**MOBILE TRANSCEIVER** 12

**PHASE MEASUREMENT** 14

$P_a$    $P_b$

**DISPLAY** 18

**CONVERTER** 16

Fig. 1

**REFERENCE TRANSPONDER** 20

$f_0$
$f_1$
$f_2$

**MOBILE TRANSCEIVER** 22

**PHASE MEASUREMENT** 24

$P_0$    $P_1$    $P_2$

**RANGE LANE PROCESSOR** 26

| 0 | 1 | 2 | E |
|---|---|---|---|
| 3 | 4 | 5 | |
| 6 | 7 | 8 | 27 |
| 9 | # | / | |

$L_0$

**DISPLAY** 28

$L_0$

29

$S_1$

**LANE CORRECTION** 32
**COARSE**
**FINE**

C

COARSE

FINE

$R_0$    $L_0$    $P_1$    $P_2$

**LANE IDENTIFICATION PROCESSOR** 30

$S_2$

Fig. 2

$L_C$ + $\Sigma$ + $L_0$

+

C

Fig. 5

Fig. 3

Fig. 4